# EUROPEAN PATENT SPECIFICATION

(11) **EP 1 818 291 B1**
(45) Date of publication and mention of the grant of the patent: **07.04.2010**
(21) Application number: 07102309.7
(22) Date of filing: 13.02.2007
(51) Int. Cl.: B65G 17/48, B65G 47/51

(54) **Variable-capacity product transit store with shelves suspended from two parallel conveyor chains**
Pufferspeicher von variabler Kapazität mit von zwei parallelen Förderketten hängenden Regalen
Magasin de transit de produits à capacité variable à étagères suspendues à partir de deux chaînes de convoyeur parallèles

(30) Priority: 14.02.2006 IT TO20060105
(43) Date of publication of application: 15.08.2007
(73) Proprietor: OPM S.p.A., Monticello d'Alba (Cuneo) (IT)
(72) Inventor: Colombo Alberto, 10100 Torino (IT); Spatolisano Francesco, 10088 Volpiano (IT)
(74) Representative: Jorio, Paolo

(56) References cited:
- DE-B- 1 227 831
- US-A- 5 788 057
- US-B1- 6 640 960

## Description

The present invention relates to a variable-capacity product transit store of the type comprising two parallel conveyor chains, from which are suspended a number of supporting members or so-called "gondolas".

In stores of this sort, products are transferred in ranks, i.e. in horizontal lines, from an input to an output in "gondolas", each of which comprises one or more parallel shelves, and is hinged at the top to two conveyor chains. The conveyor chains are located on opposite sides of the "gondolas", are powered, wind about a number of sprockets, and extend along an annular path comprising a forward branch and a return branch.

The forward and return branches have bends, i.e. comprise a number of up and down portions between top and bottom end points defined by the sprockets, and have respective lengths that can be varied by equal opposite amounts, by lifting or lowering some of the sprockets, to vary the capacity of the store as a function of product outflow requirements.

Solutions of this kind are disclosed, for example, by US-B1-6640950 and US-A-5788057 and correspond to the preamble of claim 1.

In known solutions, on reaching the output, the lines of products are unloaded off the respective shelves by means of a vertically fixed push member moved horizontally by an actuator. When the actuator is working, the conveyor chains are stopped in such a position as to keep the push member, the line of products for unloading, and the output aligned horizontally, and for this reason are step-operated.

In known solutions of the above type, when travelling along the top and bottom end points, the "gondolas" tend to rock about their hinge axes with respect to the two chains, on account of the centrifugal forces acting on the "gondolas" along the curved top and bottom portions of the path, and repeated stopping and starting of the step-operated conveyor chains.

As a result, the "gondolas" clash and may even become entangled with one another if a sufficiently ample radius of curvature is not provided along the curved portions of the path and/or if the "gondolas" are not spaced sufficiently far apart. Moreover, along the forward branch, the products tend to slip on and even fall off the shelves.

It is an object of the present invention to provide a variable-capacity product transit store designed to provide a straightforward, low-cost solution to the above drawbacks, and which is preferably compact and efficient.

According to the present invention, there is provided a variable-capacity product transit store as defined in claim 1.

A non-limiting embodiment of the invention will be described by way of example with reference to the accompanying drawings, in which:
Figure 1 shows a schematic front view of a preferred embodiment of the variable-capacity product transit store according to the present invention;
Figure 2 shows a larger-scale view in perspective of a component part of the store;
Figure 3 is similar to Figure 1, and shows a larger-scale detail of the store according to the present invention;
Figure 4 shows a view in perspective, with parts removed for clarity, of the Figure 3 detail.

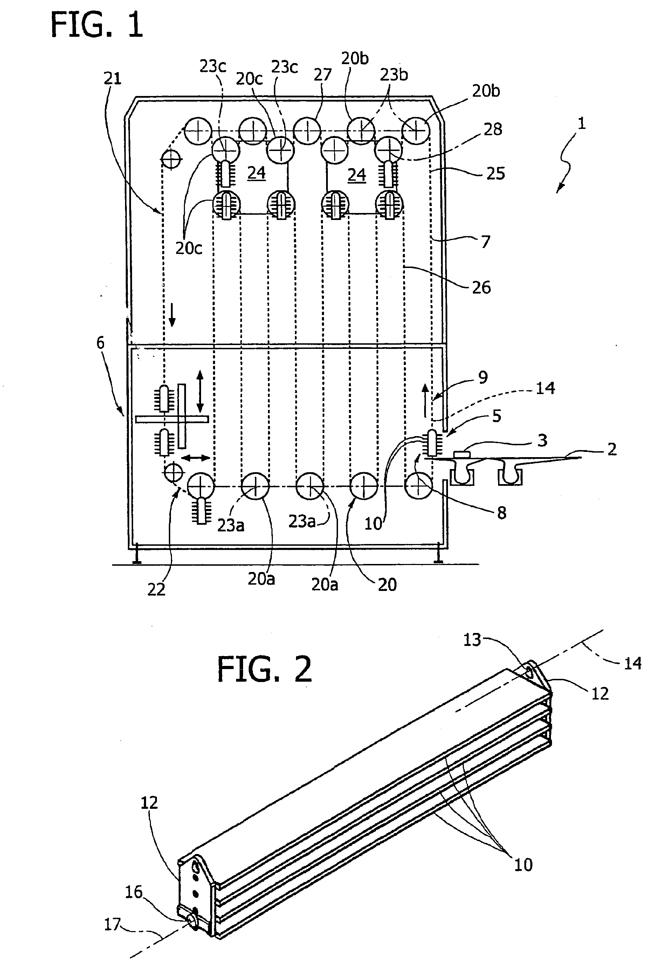

Number 1 in Figure 1 indicates a variable-capacity store defining a storage unit forming part of a line 2 for transferring products 3 arranged, for example, in ranks, i.e. in horizontal lines perpendicular to the transfer direction. Store 1 comprises an input 5; an output 6; and two parallel conveyor chains 7 (only one shown) supporting a number of supporting members, or so-called "gondolas", 8 interposed between chains 7 and equally spaced along an annular path 9.

With reference to Figure 2, each member 8 comprises a number of, e.g. four or six, parallel shelves 10, onto which the incoming products 3 at input 5 are loaded in a manner not described in detail; and two vertical sidewalls 12, which are fitted in fixed positions to the sides of shelves 10 in a manner not described in detail, and are hinged at their top ends 13 to chains 7 about a horizontal axis 14 to keep shelves 10 suspended. Two cylindrical positioning appendixes 16 project from the two sidewalls 12 of each "gondola" 8 in opposite directions along an axis 17 parallel to and eccentric with respect to relative axis 14.

With reference to Figure 1, chains 7 extend about sprockets 20 (shown schematically) to define path 9, and are operated synchronously in known manner not shown. Path 9 comprises a forward branch 21 from input 5 to output 6, along which shelves 10 are loaded with products 3; and a return branch 22 from output 6 to input 5, along which shelves 10 are empty. Some of the sprockets, indicated 20a, are located at the bottom of store 1, and have fixed axes of rotation 23a; some, indicated 20b, are located at the top end of store 1, and have fixed axes of rotation 23b; and some, indicated 20c, are located in between, and have axes of rotation 23c which are movable vertically to vary the lengths of branches 21 and 22 by respective equal opposite amounts. More specifically, sprockets 20c are fitted to a plate 24, which is moved vertically, by a motor not shown, with respect to a frame of store 1.

Branches 21 and 22 comprise vertical up portions 25; vertical down portions 26; and curved portions 27, 28, which connect portions 25, 26 and define the top and bottom end points, respectively, of path 9 at the various sprockets 20.

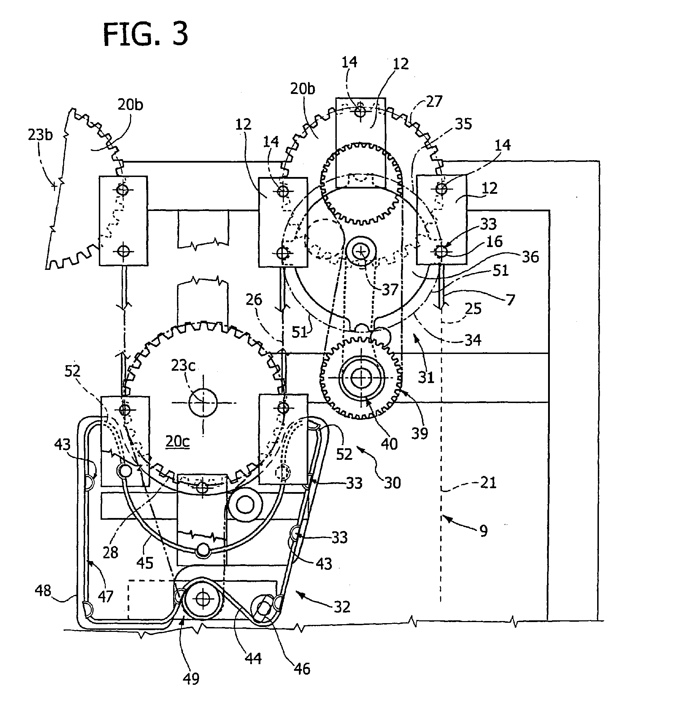

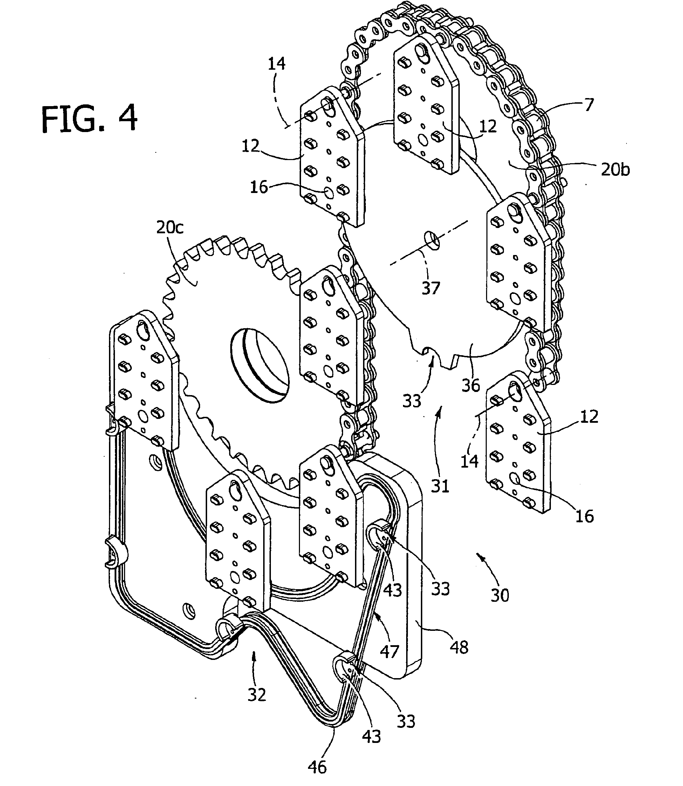

With reference to Figures 3 and 4 (which show only one sidewall 12 of each "gondola" 8), store 1 comprises a retaining assembly 30 associated with at least part of portions 27, 28 to prevent or reduce rotation of "gondolas" 8 about respective axes 14 close to the top and bottom end points. Assembly 30 comprises a device 31 for the top end points, and a different device 32 for the bottom end points. With reference to sprocket 20b in Figures 3 and 4, device 31 comprises a number of retaining seats 33 having a substantially semicircular bottom surface complementary to the lateral profile of appendixes 16. Seats 33 are located along a circular trajectory 34 comprising a top accompanying portion 35 parallel to portion 27 : the vertical distance between portions 35 and 27 equals the distance between axis 17 and axis 14 of each "gondola" 8. Seats 33 are formed in fixed positions on the periphery of a disk 36, with the same spacing as that of "gondolas" 8, and with their concavities facing radially outwards. Disk 36 rotates about a respective axis 37 parallel to and fixed with respect to axis 23b, is parallel to sprocket 20b, is interposed axially between sprocket 20b and sidewalls 12, and rotates to move seats 33 synchronously with chains 7. More specifically, disk 36 is driven by rotation of sprocket 20b via two belt or chain drives 39, 40 arranged in series in parallel planes, and both having a velocity ratio of one.

With reference to sprocket 20c in Figures 3 and 4, device 32 also comprises retaining seats 33, but which are defined by respective cylindrical half-shells 43. Half-shells 43 are fitted to a chain 46, with the same spacing as that of "gondolas" 8, project from the chain in a direction parallel to axis 23c, and are fed by chain 46 along an undulating trajectory 44 comprising a top accompanying portion 45 parallel to portion 28 : the vertical distance between portions 45 and 28 equals the distance between axis 17 and axis 14 of each "gondola" 8.

Chain 46 runs partly inside a guide groove 47 formed in a plate 48 fixed with respect to axis 23c and coplanar with sprocket 20c, and is driven by rotation of sprocket 20c via a belt or chain drive 49 with a velocity ratio such as to move seats 33 at the same linear speed as chains 7.

At the ends of portions 25, 26, i.e. as "gondolas" 8 approach and withdraw from portions 27, 28, appendixes 16 are automatically eased in and out of seats 33. Trajectories 34, 44 approach and withdraw from portions 25, 26 along respective outwardly convex portions 51, 52, i.e. projecting towards path 9, to assist engagement and release of appendixes 16. At the ends of portions 27, 28, seats 33 define lateral stops to prevent "gondolas" 8 from oscillating in at least one rotation direction about axes 14 (to limit oscillation in the opposite rotation direction, a vertical stop wall, fixed with respect to axes 23, may be provided). Along the intermediate portion of portions 27, 28, the edge of each seat 33 is shaped to enclose the bottom part of appendix 16 and retain it in both rotation directions.

As will be clear from the foregoing description, assembly 30 provides for eliminating oscillation of "gondolas" 8 at the top and bottom end points, by cooperating in contact with appendixes 16 to accompany the movement of "gondolas" 8 along at least part of portions 27, 28. So designed, store 1 is compact, by allowing close spacing of "gondolas" 8 and small radii of curvature of sprockets 20, and not needing an excessive amount of space for assembly 30, and is also efficient, by virtue of cylindrical appendixes being safely engaged and released automatically by semicylindrical seats.

Clearly, changes may be made to store 1 as described herein without, however, departing from the scope of the present invention, which is defined by the appended claims 1.

In particular, appropriately stiff belts may be used instead of chains 46, 7; and/or each "gondola" 8 may have a different number of shelves 10; and/or appendixes 16 and assembly 30 may be provided for only one of the two sidewalls 12 of "gondolas" 8.

Moreover, the positioning function of appendix 16 may be performed by a portion shaped and/or located differently; and/or assembly 30 may comprise a device similar to device 32 for the top end points as well.

## Claims

1. A variable-capacity product transit store (1) comprising:
- an input (5) and at least one output (6) for products;
- two parallel, synchronously operated conveyor chains or belts (7);
- a number of supporting members (8), each comprising at least one respective shelf (10) for supporting said products (3), and which are interposed between said conveyor chains or belts, are hinged at the top to said two conveyor chains or belts (7) about respective horizontal axes (14) to keep said shelves (10) suspended, and are equally spaced along an annular path (9) comprising a forward branch (21) and a return branch (22) between said input (5) and said output (6); said forward branch and said return branch (21, 22) comprising:
a) vertical up portions (25);
b) vertical down portions (26);
c) curved portions (27, 28) connecting said vertical portions (25, 26) and defining top and bottom end points of said path (9);
the lengths of said forward branch and said return branch (21, 22) being variable by respective equal opposite amounts;
and the store being **characterized by** comprising:
- first retaining means (31) for preventing rotation of said supporting members (8) about said horizontal axes (14) by at least part of said top end points of at least said forward branch (21);
- second retaining means (32) for preventing rotation of said supporting members (8) about said horizontal axes (14) by at least part of said bottom end points of at least said forward branch (21);
said first and second retaining means (31,32) comprising movable members (33), which cooperate in contact with reference portions (16) of said supporting members (8) to accompany the movement of said supporting members (8) along at least part of the length of said curved portions (27,28).

2. A store as claimed in Claim 1, **characterized in that** said movable members (33) cooperate in contact with said reference portions (16) along the whole length of said curved portions (27, 28).

3. A store as claimed in Claim 1 or 2, **characterized in that** each said supporting member (8) comprises a respective pair of sidewalls (12), which are located on opposite sides of said shelf (10), are fixed with respect to the shelf, and are hinged at the top to said conveyor chains or belts (7); said reference portions (16) projecting from at least one of the sidewalls (12) of each supporting member, along an axis (17) parallel to and eccentric with respect to said horizontal axis (14).

4. A store as claimed in Claim 3, **characterized in that** said reference portions are defined by cylindrical portions (16).

5. A store as claimed in any one of the foregoing Claims, **characterized in that** said movable members define respective retaining seats (33), and are operated to move synchronously with said conveyor chains or belts (7) along a trajectory (34, 44) comprising an accompanying portion (35, 45) parallel to at least part of said curved portions (27, 28).

6. A store as claimed in Claim 5, **characterized in that** said trajectory (34) is circular; said retaining seats (33) having their concavities facing radially outwards at all times.

7. A store as claimed in Claim 6, **characterized in that** said retaining seats (33) are carried in fixed positions on the periphery of a disk (36) rotated about a respective axis (37) parallel to said horizontal axes (14).

8. A store as claimed in Claim 5, **characterized in that** said retaining seats (33) are defined by half-shells (43) carried by a further belt or chain (46) driven along said trajectory (44).

9. A store as claimed in Claim 8, **characterized in that** said further chain or belt (46) runs at least partly inside a guide groove (47).

10. A store as claimed in any one of Claims 5 to 9, **characterized in that** said trajectory (34, 44) approaches and withdraws from said path (9) along portions (51, 52) having convexities facing the path (9).

## Patentansprüche

1. Ein Produkt-Transport-Speicher (1) mit variabler Kapazität, aufweisend:
einen Eingang (5) und mindestens einen Ausgang (6) für Produkte,
zwei parallele, synchron betriebene Förderketten oder -bänder (7),
eine Anzahl von Halteelementen (8), die jeweils mindestens ein jeweiliges Fach (10) zum Halten der Produkte (3) aufweisen und die zwischen den Förderketten oder -bändern angeordnet sind, am oberen Ende gelenkig mit den beiden Förderketten oder -bändern (7) um jeweilige horizontale Achsen (14) verbunden sind, um die Fächer (10) aufgehängt zu halten, und entlang einer ringförmigen Bahn (9), die einen Zulaufzweig (21) und einen Rücklaufzweig (22) zwischen dem Eingang (5) und dem Ausgang (6) aufweist, in gleichem Abstand angeordnet sind, wobei der Zulaufzweig und der Rücklaufzweig (21, 22) aufweisen:
a) vertikale Aufwärtsabschnitte (25),
b) vertikale Abwärtsabschnitte (26),
c) gekrümmte Abschnitte (27, 28), die die vertikalen Abschnitte (25, 26) miteinander verbinden und obere und untere Endpunkte der Bahn (9) definieren,
wobei die Längen des Zulaufzweiges und des Rücklaufzweiges (21, 22) um jeweilige gleiche entgegengesetzte Beträge variabel sind,
wobei der Speicher **dadurch gekennzeichnet ist, dass** er aufweist:
- ein erstes Haltemittel (31) zum Verhindern des Drehens der Halteelemente (8) um die horizontalen Achsen (14) durch zumindest einen Teil der oberen Endpunkte von zumindest dem Zulaufzweig (21),
- ein zweites Haltemittel (32) zum Verhindern des Drehens der Halteelemente (8) um die horizontalen Achsen (14) durch zumindest einen Teil der unteren Endpunkte von zumindest dem Zulaufzweig (21),
- wobei das erste und das zweite Haltemittel (31, 32) bewegbare Elemente (33) aufweisen, die in Kontakt mit Referenzabschnitten (16) der Halteelemente (8) zusammenwirken, um die Bewegung der Halteelemente (8) entlang zumindest einem Teil der Länge der gekrümmten Abschnitte (27, 28) zu begleiten.

2. Ein Speicher gemäß Anspruch 1, **dadurch gekennzeichnet, dass** die bewegbaren Elemente (33) in Kontakt mit den Referenzabschnitten (16) entlang der gesamten Länge der gekrümmten Abschnitte (27, 28) zusammenwirken.

3. Ein Speicher gemäß Anspruch 1 oder 2, **dadurch gekennzeichnet, dass** jedes Halteelement (8) ein jeweiliges Paar von Seitenwänden (12) aufweist, die an entgegengesetzten Seiten des Faches (10) positioniert sind, relativ zu dem Fach befestigt sind und an dem oberen Ende gelenkig mit den Förderketten oder -bändern (7) verbunden sind, wobei die Referenzabschnitte (16) von mindestens einer der Seitenwände (12) von jedem Halteelement entlang einer Achse (17) parallel und exzentrisch zu der horizontalen Achse (14) hervorstehen.

4. Ein Speicher gemäß Anspruch 3, **dadurch gekennzeichnet, dass** die Referenzabschnitte durch zylinderförmige Abschnitte (16) definiert sind.

5. Ein Speicher gemäß einem der vorhergehenden Ansprüche, **dadurch gekennzeichnet, dass** die bewegbaren Elemente jeweilige Haltesitze (33) aufweisen und betrieben werden, um sich synchron mit den Förderketten oder -bändern (7) entlang einer Bewegungsbahn (34, 44) zu bewegen, die einen Begleitabschnitt (35, 45) parallel zu zumindest einem Teil der Kurvenabschnitte (27, 28) aufweist.

6. Ein Speicher gemäß Anspruch 5, **dadurch gekennzeichnet, dass** die Bewegungsbahn (34) kreisförmig ist, wobei die Konkavitäten der Haltesitze (33) zu jedem Zeitpunkt radial nach außen gewandt sind.

7. Ein Speicher gemäß Anspruch 6, **dadurch gekennzeichnet, dass** die Haltesitze (33) in festen Positionen auf dem Umfang einer Scheibe (36) getragen werden, die um eine jeweilige Achse (37) parallel zu den horizontalen Achsen (14) gedreht wird.

8. Ein Speicher gemäß Anspruch 5, **dadurch gekennzeichnet, dass** die Haltesitze (33) durch Halbschalen (43) definiert sind, die von einem/einer zusätzlichen Band oder Kette (46) getragen werden, das/die entlang der Bewegungsbahn (44) angetrieben wird.

9. Ein Speicher gemäß Anspruch 8, **dadurch gekennzeichnet, dass** die/das zusätzliche Kette oder Band (46) zumindest teilweise innerhalb einer Führungsnut (47) verläuft.

10. Ein Speicher gemäß einem der Ansprüche 5 bis 9, **dadurch gekennzeichnet, dass** sich die Bewegungsbahn (34, 44) der Bahn (9) entlang Abschnitten (51, 52), die der Bahn (9) zugewandte Konvexitäten aufweisen, annähert und von dieser wieder entfernt.

## Revendications

1. Magasin (1) de transit de produits à capacité variable comprenant:
- une entrée (5) et au moins une sortie (6) pour les produits;
- deux chaînes ou courroies (7) de convoyeur parallèles et synchronisées en fonctionnement;
- un certain nombre d'organes support (8), chacun comprenant au moins une tablette respective (10) pour supporter lesdits produits (3), et qui sont interposés entre lesdites chaînes ou courroies de convoyeur, sont articulés auxdites chaînes ou courroies (7) de convoyeur au sommet autour d'axes horizontaux respectifs (14) afin de maintenir lesdites tablettes (10) suspendues, et sont régulièrement espacés le long d'un chemin (9) annulaire comprenant une branche avant (21) et une branche de retour (22) entre ladite entrée (5) et ladite sortie (6); ladite branche avant et ladite branche de retour (21, 22) comprenant:
a) des portions supérieures verticales (25);
b) des portions inférieures verticales (26);
c) des portions incurvées (27, 28) reliant lesdites portions verticales (25, 26) et définissant des points d'extrémités supérieures et inférieures dudit chemin (9); les longueurs desdites branches avant et de retour (21, 22) étant variables par des quantités respectives égales et opposées;
et le magasin étant **caractérisé en ce qu'**il comprend:
- un premier moyen de retenue (31) empêchant la rotation desdits organes support (8) autour desdits axes horizontaux (14) par au moins une partie desdits points d'extrémité supérieure d'au moins de ladite branche avant (21);
- un second moyen de retenue (32) empêchant la rotation desdits organes support (8) autour desdits axes horizontaux (14) par au moins une partie desdits points d'extrémité inférieure d'au moins de ladite branche avant (21); lesdits premier et second moyens de retenue (31, 32) comprenant des organes déplaçables (33), qui coopèrent en contact avec des portions de référence (16) desdits organes support (8) afin d'accompagner le mouvement desdits organes support (8) le long d'au moins une partie de la longueur desdites portions incurvées (27, 28).

2. Magasin selon la revendication 1, **caractérisé en ce que** lesdits organes déplaçables (33) coopèrent en contact avec lesdites portions de référence (16) le long de toute la longueur desdites portions incurvées (27, 28).

3. Magasin selon la revendication 1 ou 2, **caractérisé en ce que** chaque organe support (8) comprend une paire respective de parois latérales (12), qui sont situées sur les côtés opposés de ladite tablette (10), sont fixées respectivement à la tablette, et sont articulées au sommet auxdites chaînes ou courroies (7) de convoyeur; lesdites portions de référence (16) faisant saillie d'au moins une des parois latérales (12) de chaque organe support, le long d'un axe (17) parallèle et excentrique auxdits axes horizontaux (14).

4. Magasin selon la revendication 3, **caractérisé en ce que** lesdites portions de référence sont définies par des portions cylindriques (16).

5. Magasin selon l'une quelconque des revendications précédentes, **caractérisé en ce que** lesdits organes déplaçables définissent respectivement des sièges de retenue (33), et sont exploités de façon à se déplacer de manière synchrone avec lesdites chaînes ou courroies (7) de convoyeur le long d'une trajectoire (34, 44) comprenant une portion d'accompagnement (35, 45) parallèle à au moins une partie desdites portions incurvées (27, 28).

6. Magasin selon la revendication 5, **caractérisé en ce que** ladite trajectoire (34) est circulaire; lesdits sièges de retenue (33) ont leurs concavités faisant en tout temps face radialement vers l'extérieure.

7. Magasin selon la revendication 6, **caractérisé en ce que** lesdits sièges de retenue (33) sont portés dans des positions fixes à la périphérie d'un disque (36) tournant autour d'un axe respectif (37) parallèle auxdits axes horizontaux (14).

8. Magasin selon la revendication 5, **caractérisé en ce que** lesdits sièges de retenue (33) sont définis par des demi-coquilles (43) portées par une courroie ou chaine supplémentaire (46) entraînée le long de ladite trajectoire (44).

9. Magasin selon la revendication 8, **caractérisé en ce que** ladite courroie ou chaine supplémentaire (46) tourne au moins en partie à l'intérieur d'une rainure de guidage (47).

10. Magasin selon l'une des revendications 5 à 9, **caractérisé en ce que** ladite trajectoire (34, 44) se rapproche et s'éloigne dudit chemin (9) le long de portions (51, 52) ayant des convexités faisant face au chemin (9).
